# EUROPEAN PATENT SPECIFICATION

(11) **EP 1 674 686 B1**
(45) Date of publication and mention of the grant of the patent: **30.01.2008**
(21) Application number: 05027580.9
(22) Date of filing: 16.12.2005
(51) Int. Cl.: F01N 7/18, F16J 15/06, F16L 19/00, F16L 21/02, F16L 23/18, F16L 23/16

(54) **Pipe joint, gasket and method for obtaining the joint**
Rohrverbindung, Dichtung und Herstellungsverfahren der Rohrverbindung
Joint de conduits, joint d'étanchéité et procédé de fabrication du joint

(30) Priority: 23.12.2004 IT TO20040898
(43) Date of publication of application: 28.06.2006
(73) Proprietor: Carl Freudenberg KG, 69469 Weinheim (DE)
(72) Inventor: Ramoino, Paolo, 10036 Settimo T.se (TO) (IT)

(56) References cited:
- EP-A- 0 242 868
- EP-A- 1 267 049
- DE-A1- 4 033 160
- DE-A1- 4 242 290
- PATENT ABSTRACTS OF JAPAN vol. 1997, no. 09, 30 September 1997 (1997-09-30) & JP 09 133279 A (NIPPON REINZ CO LTD; TOOPURA:KK; NISSAN MOTOR CO LTD), 20 May 1997 (1997-05-20)

## Description

### FIELD OF THE INVENTION

The present invention relates, in general, to joints for pipelines traversed by fluids in the liquid or gaseous state.

In particular, the present invention relates to joints for pipeline segments to be used in the automotive industry to discharge exhaust gases (exhaust pipelines or pipes) of internal combustion engines.

### PRIOR ART

In the prior art, in particular in the automotive industry, use of cup or flange joints or junctions is known to join exhaust gas pipeline segments.

Cup junctions are generally used in cases in which, in use, even high fluid losses are allowed, since heretofore no satisfactory solutions (e.g. adequate gaskets) had been identified to assure the seal of this type of junctions.

In particular, cup junctions are used on the exhaust pipelines of motor vehicles due to their low cost but, because of the growing need to contain emissions, these junctions have been relegated in ever more limited areas of the vehicle, e.g. downstream of any catalytic devices in order not to distort the measurement by probes associated to such catalytic devices for pollution control.

In general, a cup joint comprises a base pipe (male pipe) and a pie having an appropriately widened end (female or female end) able to receive a determined portion of the male pipe.

In the case of motor vehicles, installation is accomplished manually, applying an axial force to the male pipe and operating under the vehicle, so it is advantageous to leave considerable "play" between the diameter of the male pipe and the female in order to require a small force for installation.

The prior art teaches that, to avoid the subsequent extraction of the male pipe from the female in the axial direction, it is advantageous to effect two or more cuts on the female in the axial direction in order to allow, subsequently to installation, by means of an external collar, the narrowing of the diameter of the female end and its forcing on the outer diameter of the male pipe

In this type of prior art, fluid loss occurs through the "play" between female diameter and male pipe diameter (circumferential play) and through the innermost part of the cuts, because they cannot be deformed by the outer collar.

The patent document published with N. JP09-133279 discloses a type of cup joint that attempts to solve both the problem of a complete locking and that of an effective seal of the joint.

The known document proposes a cup joint in which the female end comprises a conical segment and a window; the window is configured in such a way that a collar having a section inclined in the direction of axial mounting can be inserted into it. The male pipe, according to the known document, comprises, in the terminal part, a conical segment and, at the window, a groove,

During installation, the collar is pressed in the window in such a way as to cause the axial movement of the male pipe in the female until the respective conical segments of the male pipe and of the female are approached.

According to the document, to assure a good seal, at the conical segments is interposed such a sealing material that, as the conical segments approach, breaks up into small pieces in order to occupy the space between the male and female pipe.

The Applicant notes that this kind of joint is particularly complex and difficult to mount to the point of making its use and convenience particularly limited.

Moreover, the Applicant notes that although the known joint assures a good axial locking, it does not assures, due to defects or coarse tolerances, a good seal against fluid leakage since, in use, only a small percentage of forces is discharged orthogonally to the axial locking forces.

The prior art also teaches the use of flanged joints, in particular, for applications pertaining to the exhaust pipelines of motor vehicles.

In flanged junctions, generally more expensive than cup junctions, the pipe segments are joined by means of a pair of flanges appropriately welded or fastened to the ends of the pipe segments.

These types of junctions are mounted by pressing the flanges together with mechanical means such as screws, springs, etc., in order to mutually approach the flanges and, consequently, the pipe segments as much as possible.

Although flanged junctions generally assure a good axial locking, in fact they have similar problems to those noted for cup joints with respect to fluid sealing, for the coupling between the flanges and consequently between the pipes is not always adequate, for example due to defects or coarse machining tolerances. To overcome said problems, various solutions of flanged joints have been proposed and, in particular, of gaskets or sealing materials to be used to assure a good seal by such joints.

For example, patent document EP 1 267 049 B1 proposes, in particular, a gasket with toroidal development for flanged joints to be used for the passage of the exhaust gases of internal combustion engines.

The proposed gasket comprises, in addition to a graphite ring encapsulated in a sheet of metal with toroidal development, an additional sheet able to be held associated to one of the two flanges when mounting the joint.

The Applicant observes that this type of joint too, although it assures a good axial locking, does not assure, due to defects or coarse tolerances, a good seal against fluid leakage because, in use, only a low percentage of forces is discharged orthogonally to the axial locking forces.

Further, patent publication DE 42 42 290 A1 describes a sealing configuration for pressurized elements. The configuration includes two coupling elements of different diameters. Both coupling elements contain cone-shaped surfaces contacting each other. The inclination angels of both cone-shaped surfaces are different. The configuration further contains a sealing element in form of an o-ring disposed outside the cone-shaped surfaces in a groove of the inner element.

The Applicant essentially observes that prior art joints, both cup and flange type, do not seem to exhibit satisfactory characteristics with regard to sealing against the leakage of fluids, in the liquid or gaseous state, which flow through them.

### DISCLOSURE OF THE INVENTION

The object of the present invention is to define a joint structure and a method for obtaining a joint structure having good sealing properties.

According to the present invention, this object is achieved by means of a joint structure and a method for obtaining a joint structure having the characteristics set out in claim 1 and 9.

The claims are an integral part of the technical teaching provided herein with regard to the invention.

According to the invention, in the joint structure the tubes at the end comprise a female segment and a male segment with conical sections with differentiated inclination.

Preferrably, the joint structure are of the cup type or of the flange cup.

### BRIEF DESCRIPTION OF THE FIGURES

This and other characteristics of the present invention will become readily apparent from the following description of a preferred embodiment, provided by way of non limiting example with the aid of the accompanying figures, in which:
Fig. 1a and 1b show a first embodiment of the joint according to the invention;
Fig. 2 shows a second embodiment of the joint according to the invention; and
Fig. 3a to 3f show examples of gaskets usable in the joints of Fig. 1a, 1 b and 2.

### DESCRIPTION OF PREFERRED EMBODIMENTS

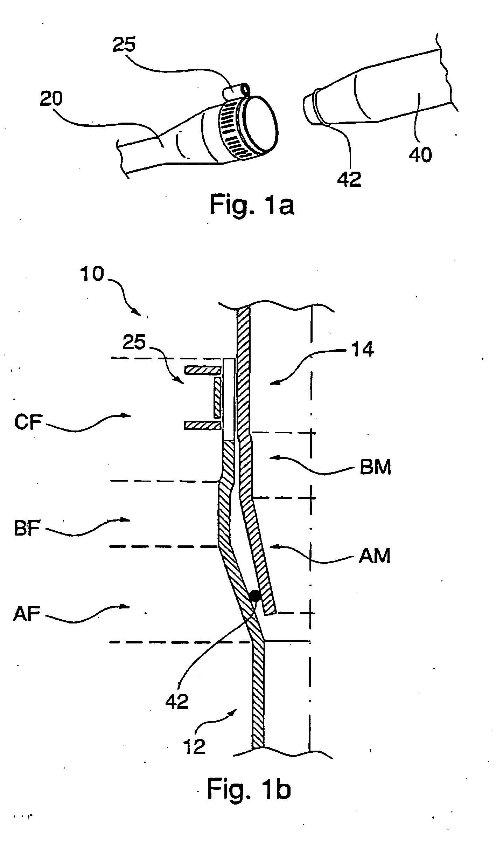

With reference to Fig. 1 a and 1b, a joint or a joint structure, in a first embodiment, of the cup type 10, comprises a first end (female end or female) 12 of a first pipe segment or pipe (female segment) 20, e.g. made of stainless steel or other material able not to be corroded by the fluids that flow through it, e.g. acid condensation, and a second end (male end or male) 14 of a second pipe segment (male pipe) 40, e.g. made of the same material as the same pipe 20, able to be joined by axial pressure and locked, e.g. by means of a known clamp 25.

The female end 12 comprises, in a preferred embodiment, a first area (area AF) with substantially conical section with an angle that diverges, relative to the axis of the pipe, ranging, for example, between 5° and 15°. This shape, as will be described in detail below, is able to assure, in use, the seal of the joint 10. Preferably, the area AF has such a surface finish as to be free of coarse defects such as scratches, machining prints etc.

The female 12 also comprises, in the preferred embodiment, a second area (area BF) with sufficiently ample inner section to allow the insertion of the male 14, as will be explained in detail below.

The female 12 comprises, lastly, in the preferred embodiment, a third area (area CF) having a slightly smaller diameter than the diameter of the area BF.

In additional embodiments, in the area CF are provided two or more known cuts in the axial direction.

The area CF, so configured, is capable both of allowing a good centring of the pipes 20 and 40, as said area CF, as is readily understandable to those skilled in the art, is the last one to be inserted during the mounting phase, and of assuring a good mechanical tightening through the clamp 25.

The male end 14 comprises, in the preferred embodiment, a first area (area AM) with substantially conical section with a converging angle relative to the axis of the pipe, ranging, for example, between 4° and 14° and with a preferable value of about 10°.

In the present description, use of the expression "substantially conical" means that the cross section of the male or female pipe may be not only circular but also of another kind, e.g. elliptic or flattened elliptic and that consequently the areas AF and AM are substantially conical compatibly with the cross section of the pipe. In accordance with one of the characteristics of the present invention, the conical section (area AF) of the female 12 is inclined with an angle that is preferably 1°-5° greater than the inclination of the corresponding area AM of the male 14.

For example, low inclination differences will be preferable between area AF and area AM in the case of low axial load when mounting a high inclination differences in the opposite case.

As is understandable for a person skilled in the art, the inclination values indicated respectively for the area AF and AM can vary both according to the axial mounting force available and according to the section and the dimensions of the pipes, for equal materials, without altering the principle that the inclination of the area AF of the female 12 is greater than that of the area AM of the male 14.

The values provided in the example correspond to preferable values for exhaust pipes to be used in the automotive and engine industry.

The male end 14 also comprises a second area (area BM), preferably having its outer section slightly smaller than the outer section of the female 12 in the area BF, to facilitate the insertion of the male 14 into the female 12.

In other embodiments, to facilitate the insertion of the male 14 into the female 12, it is possible that only one between the area BF and the corresponding area BM is modified with respect to the inner or outer section of the respective pipes 20 and 40.

The male end 14 comprises, lastly, one or more gaskets (gasket) 42, preferably pre-mounted in the area AM, with annular shape or type.

In the preferred embodiment, the gasket 42 is pre-mounted by forcing, in known fashion, in the axial direction on the male 14, manually or with a tool, the annular shaped gasket 42 in such a way that it can be planted on the surface of the area AM of the male and come in contact, during the mounting phase, with the corresponding area AF of the female 12.

Preferably, the gasket 42 is of the deformable type and the deformability is obtained by using, for example if the joint 10 is used in the automotive and engine industry, soft metallic material, such as copper or aluminium, choosing, for example according to the maximum operating temperature: aluminium for temperatures up to 450°C and the copper for higher temperatures (up to about 800°C).

The gasket 42 may have differently shaped sections according to the axial load available when mounting the joint 10.

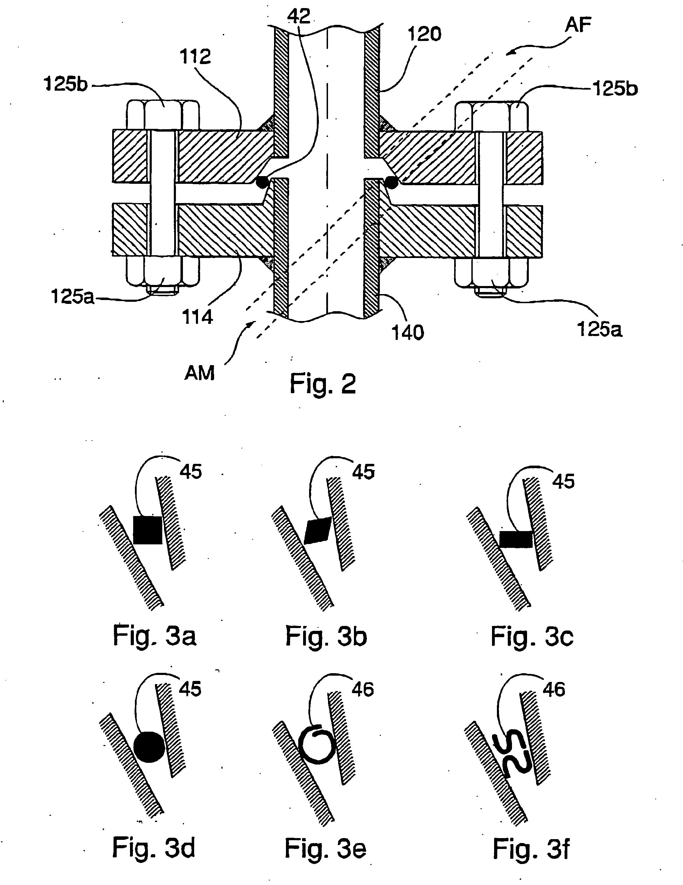

For example, the section will be solid 45 (Fig. 3a-3d) for high axial loads, e.g. 50 kg or greater, or hollow 46 (Fig. 3e-3f) for lower loads.

In the case of gaskets 42 with solid section 45, preferably, in accordance to additional possible characteristics of the present invention, in Figures 3a-3c shapes with solid section are proposed with a plurality of edges, e.g. shapes with quadrangular section, such as square, rhomboidal or rectangular. Advantageously, shapes with edges are capable of having, initially, contacts with the surface of the male 14 in very restricted area in such a way that, when forced, there are, as is understandable to a person skilled in the art, high specific pressures and consequent considerable deformation of the gasket 42; as a result of such deformations, the contact of the gasket with the pipes 20 and 40 in the joint 10, after "copying" any imperfections in the construction of the pipes, rapidly extends in the section of the gasket giving lift to the gasket 42 and thereby assuring the necessary thrust to provide a seal against fluids on the walls of the pipes 20 and 40 in the segments AF and AM.

In the case of gaskets 42 with hollow section 46, hard but elastic materials can be used for the gasket 42, e.g. stainless steel with low thickness (maximum 0.4 mm).

Use of the hollow section 46, advantageously, allows a good radial deformability and, modifying for example the thickness of the material used for the gasket 42, it is possible to obtain a residual elasticity useful to compensate for possible movements of the joint 10 as a result, for example, of heat excursions or mechanical stress variations during use.

Preferably, in accordance with additional possible characteristics of the present invention, in Fig. 3e a spiral gasket 46 is proposed and, in particular, in Fig. 3f a gasket 46 is proposed with "S" or double "S" mirror shaped hollow section, which is well suited to provide the elasticity characteristics listed above.

In accordance with a second embodiment and with reference to Fig. 2, a joint or joint structure is illustrated of the type with flanges 100 comprising a first end (flanged female element or female) 112, e.g. welded, in known fashion, to the end of a first pipe segment or pipe 120, and a second end (flanged male element or male) 114, e.g. welded in known fashion to the end of a second pipe segment or pipe 140.

Both the female element 112 and the male element 114, in addition to the pipes 120 and 140 are obtained with materials that are substantially equivalent to those described for the cup joint 10.

Both the female element 112 and the male element 114 are able to be joined, in known fashion, for example, by means of appropriate nuts 125a and screws 125b, known in themselves, arranged in axis with the pipes 120 and 140 to be joined.

Naturally, as is readily understandable to a person skilled in the art, in additional embodiments the nuts and the screws can be replaced by other devices able to perform equivalent functions, e.g. bolts, etc.

The female 112 comprises, similarly to what has already been described, an area (area AF) with substantially conical section with equivalent characteristics to those described for the cup joint 10. In this case, too, the shape of the female element 112 is adapted to assure, in use, the seal of the joint 100.

Preferably, the area AF of the female 112 has a surface finish of the type described above.

The male 114 comprises, similarly to what has already been described, an area (area AM) with substantially conical section with equivalent characteristics to those already described for the cup joint 10.

In accordance with one of the characteristics of the present invention, the conical section (area AF) of the female 112 is inclined with a greater angle than that of the area AM of the male 114 and, preferably with equivalent characteristics to those described for the cup joint 10.

The male 114 also comprises, similarly to what has already been described, one or more gaskets (gasket) 42, preferably pre-mounted in the area AM, having equivalent shape, dimensions and characteristics to those already described for the cup joint 10.

According to the method for mounting the joint, e.g. in the case of cup joint 10 (Fig. 1a. Fig. 1b) once the gasket 42 is positioned on the male end 14, a force is applied, substantially in axial direction, to the pipe 40 in such a way as to thrust the gasket 42 against the conical wall of the female 12.

The joint action of the two conical shapes is susceptible to causing the crushing of the gasket between the walls with different conicity of the female 12 and of the male 14, also with a reduced axial fitting load and it will prevent the gasket from sliding relative to both pipes, 20 and 40. In particular, the combined action of the two conical shapes is able to generate, according to the force applied, a component of forces prevalently in the transverse direction to the axial component such as to facilitate the sealing function of the gasket 42 with respect to fluids.

Lastly, once the male pipe 40 is inserted into the female pipe 20, preferably, the reduced difference between the outer section of the male pipe 40 and that of the female pipe 20 in the area CF will allow, for example, solidly to fasten the female 1'2 to the male 14 by means of the clamp 25.

The same effect of crushing the gasket 42 can be obtained, by means of the flanged joint 100 (Fig. 2), as described in the second embodiment.

In accorctance with said additional embodiment, the axial fitting load is applied by means of the closing nuts 125a to assure the fastening of the flanges. In particular, since the force that can be applied by means of the nuts 125a is greater than in the previous case (even a few tons), it will be possible to obtain, thanks to the different conicity of the male flange 114 and of the female flange 112, a strong deformation of the gasket 42 and a consequent marked mutual approach of the flanges, with the effect of compensate, for example, large shape errors or coarse tolerances of the flanges, In accordance with this second embodiment, the centring function between the flanges is delegated to the same areas AF and AM.

The joint, in the various embodiments, allows the described gaskets to obtain a good radial seal and to eliminate or reduce any plays due to shape errors or coarse tolerances, without, however, markedly increasing the mounting stress.

Obvious modifications or variants to the above description are possible, in the dimensions, shapes, materials, components, as well as in the details of the illustrated construction and of the method of operation without departing from the scope of the invention as specified by the claims that follow.

## Claims

1. A joint structure for pipelines traversed by fluid comprising:
- a first end (12, 112) of a first pipe (20);
- a second end (14, 114) of a second pipe (40) able to be fastened in axis with said first pipe (20) by applying a determined mounting force along a direction corresponding to the direction of said fastening axis;
wherein said first end (12, 112) comprises at least a female segment (AF) having substantially conical section and said second end (14, 114) comprises at least a male segment (AM) having a substantially conical section and wherin at least one gasket (42) is fitted on said conical segment of said male segment (AM) and able to apply a sealing force with a direction that is prevalently transverse to the direction of said mounting force, **characterized in that** the conical section of the femal segment (AF) has a predetermined inclination angle and that the conical section of the male segment (AM) has a smaller inclination angle than said predetermined female segment (AF).

2. A joint structure according to claim 1 **characterized in, that** said predetermined inclination angle of said female segment (AF) ranges between 5° and 15° sexagesimal degrees.

3. A joint structure according to claim 1, **characterized in, that** said at least one gasket (42) has a section selected in the group formed by
- circular solid section;
- quadrangular solid section;
- "S" shaped hollow section;
- mirror double "S" shaped hollow section;
- a section that is a combination of said sections.

4. A joint structure according to one of the claims 1 to 3 **characterized in, that** said first end (12) and said second end (14) are configured to obtain a cup joint (10).

5. A joint structure according to claim 4, **characterized in, that**
- said first end and said second end comprise, upstream of said respective female segment (AF) and said respective male segment (AM), at least one insertion area (BF, BM) having a predetermined distance between the inner section of said first pipe (20) and the outer section of said second pipe (40); and wherein
- said first end and said second end comprise, upstream of said insertion area, at least a centring area (CF) wherein the distance between the inner section of said first pipe (20) and the outer section of said second pipe (40) is smaller than said predetermined distance in the section of said insertion area.

6. A joint structure according to one of the claims 1 to 3, **characterized in, that** said first end (112) and said second end (114) are configured to obtain a flanged joint (100).

7. A joint structure according to claim 6, **characterized in, that** said flanged joint (100) comprises
- at least a pair of fastening devices (125a, 125b) associated to said first and second end (112, 114) and configured to assure the fastening of said first end (112) to said second end (114).

8. A joint structure according to one of the claims 1 to 7, **characterized in, that**
said gasket is adapted to be fitted on said segment (AM) by means of a determined fitting stress, wherein
- said gasket has a section comprising a plurality of edges; and **in that**
- at least one of said edges is able to exercise on said male segment (AM), based on said fitting stress, a specific pressure having a prevalent radial component to said pipe.

9. Method for obtaining a joint structure for pipelines traversed by fluid according to claim 1, wherein a first pipe (20) has a first end (12, 112) having at least one female segment (AF), wherein a second pipe (40) has a second end (14, 114) having at least one male segment (AM) and wherein said second pipe (40) is able to be fastened in axis to said first pipe (20), **characterised by** the steps of:
- applying to said at least one female segment (AF) a substantially conical section with a predetermined inclination angle;
- applying to said at least one male segment a substantially conical section with a smaller inclination angle than said predetermined inclination angle of said female segment (AF);
- mounting on said at least one male segment (AM) at least one gasket for generating by means of said gasket, when mounting, a sealing force with a direction that is prevalently transverse to the direction of fastening.

10. Internal combustion engine comprising at least one joint structure according to one of the claims 1 to 7.

## Patentansprüche

1. Verbindungskonstruktion für von Fluid durchströmte Rohrleitungen, wobei die Konstruktion Folgendes umfasst:
ein erstes Ende (12, 112) eines ersten Rohrs (20);
ein zweites Ende (14, 114) eines zweiten Rohrs (40), das axial ausgerichtet zum ersten Rohr (20) durch Ausüben einer bestimmten Montagekraft entlang einer der Richtung der Befestigungsachse entsprechenden Richtung befestigt werden kann;
wobei das erste Ende (12, 112) mindestens ein Aufnahmesegment (AF) mit einem im Wesentlichen konischen Querschnitt und das zweite Ende (14, 114) mindestens ein Einführungssegment (AM) mit einem im Wesentlichen konischen Querschnitt umfassen und
wobei mindestens eine Dichtung (42) am konischen Querschnitt des Einführungssegments (AM) eingepasst ist, die eine Abdichtungskraft in einer vorwiegend quer zur Richtung der Montagekraft verlaufenden Richtung ausüben kann, **dadurch gekennzeichnet, dass** der konische Querschnitt des Aufnahmesegments (AF) einen vorbestimmten Neigungswinkel hat und dass der konische Querschnitt des Einführungssegments (AM) einen Neigungswinkel hat, der kleiner als der vorbestimmte Neigungswinkel des Aufnahmesegments (AF) ist.

2. Verbindungskonstruktion nach Anspruch 1, **dadurch gekennzeichnet, dass** der vorbestimmte Neigungswinkel des Aufnahmesegments (AF) in einem von 5° bis 15° Sexagesimalgraden reichenden Bereich liegt.

3. Verbindungskonstruktion nach Anspruch 1, **dadurch gekennzeichnet, dass** mindestens eine Dichtung (42) einen aus der folgenden Gruppe ausgewählten Querschnitt hat:
kreisförmiger massiver Querschnitt;
viereckiger massiver Querschnitt;
"S"-förmiger hohler Querschnitt;
hohler Querschnitt mit spiegelbildlich verdoppelter "S"-Form;
Querschnitt, der eine Kombination dieser Querschnitte darstellt.

4. Verbindungskonstruktion nach einem der Ansprüche 1 bis 3, **dadurch gekennzeichnet, dass** das erste Ende (12) und das zweite Ende (14) so konfiguriert sind, dass eine becherförmige Verbindung (10) entsteht.

5. Verbindungskonstruktion nach Anspruch 4, **dadurch gekennzeichnet, dass** das erste Ende und das zweite Ende, stromaufwärts vor dem jeweiligen Aufnahmesegment (AF) und dem jeweiligen Einführungssegment (AM), mindestens eine Einführungsfläche (BF, BM) mit einer vorbestimmten Distanz zwischen dem Innenquerschnitt des ersten Rohrs (20) und dem Außenquerschnitt des zweiten Rohrs (40) umfassen; und wobei
das erste Ende und das zweite Ende, stromaufwärts vor der Einführungsfläche, mindestens eine Zentrierfläche (CF) umfassen, wobei die Distanz zwischen dem Innenquerschnitt des ersten Rohrs (20) und dem Außenquerschnitt des zweiten Rohrs (40) kleiner als die vorbestimmte Distanz im Querschnitt der Einführungsfläche ist.

6. Verbindungskonstruktion nach einem der Ansprüche 1 bis 3, **dadurch gekennzeichnet, dass** das erste Ende (112) und das zweite Ende (114) so konfiguriert sind, dass eine Flanschverbindung (100) entsteht.

7. Verbindungskonstruktion nach Anspruch 6, **dadurch gekennzeichnet, dass** die Flanschverbindung (100) Folgendes umfasst:
mindestens ein dem ersten und dem zweiten Ende (112, 114) zugeordnetes Paar Befestigungsvorrichtungen (125a, 125b), die so konfiguriert sind, dass die Befestigung des ersten Endes (112) am zweiten Ende (114) sichergestellt ist.

8. Verbindungskonstruktion nach einem der Ansprüche 1 bis 7, **dadurch gekennzeichnet, dass** die Dichtung so ausgebildet ist, dass sie mittels einer vorbestimmten Passbeanspruchung am Segment (AM) eingepasst werden kann, wobei die Dichtung einen mehrere Kanten umfassenden Querschnitt hat, und dass mindestens eine der Kanten, basierend auf der Einpassbeanspruchung, auf das Einführungssegment (AM) einen spezifischen Druck mit einer vorwiegenden radialen Komponente gegenüber dem Rohr ausüben kann.

9. Verfahren zur Herstellung einer Verbindungskonstruktion für von Fluid durchströmte Rohrleitungen nach Anspruch 1, wobei ein erstes Rohr (20) ein erstes Ende (12, 112) mit mindestens einem Aufnahmesegment (AF) hat, ein zweites Rohr (40) ein zweites Ende (14, 114) mit mindestens einem Einführungssegment (AM) hat, und wobei das zweite Rohr (40) axial ausgerichtet zum ersten Rohr (20) befestigt werden kann, wobei das Verfahren durch die folgenden Schritte **gekennzeichnet** ist:
Ausbilden eines im Wesentlichen konischen Querschnitts mit einem vorbestimmten Neigungswinkel an dem mindestens einen Aufnahmesegment (AF);
Ausbilden eines im Wesentlichen konischen Querschnitts mit einem Neigungswinkel, der kleiner als der vorbestimmte Neigungswinkel des Aufnahmesegments (AF) ist, an dem mindestens einen Einführungssegment;
Montieren von mindestens einer Dichtung an dem mindestens einen Einführungssegment (AM), um bei der Montage mittels der Dichtung eine Abdichtungskraft mit einer vorwiegend quer zur Befestigungsrichtung verlaufenden Richtung zu erzeugen.

10. Verbrennungsmotor, der mindestens eine Verbindungskonstruktion nach einem der Ansprüche 1 bis 7 umfasst.

## Revendications

1. Structure de joint pour pipelines traversés par des fluides, comprenant :
- une première extrémité (12, 112) d'un premier conduit (20);
- une deuxième extrémité (14, 114) d'un deuxième conduit (40) capable d'être fixée dans l'axe dudit premier conduit (20) en appliquant une force de fixation déterminée le long d'une direction correspondant à la direction dudit axe de fixation ;
ladite première extrémité (12, 112) comprenant au moins un segment femelle (AF) ayant une section substantiellement conique et ladite deuxième extrémité (14, 114) comprenant au moins un segment mâle (AM) ayant une section substantiellement conique et au moins un joint d'étanchéité (42) étant ajusté sur ladite section conique dudit segment mâle (AM) et pouvant appliquer une force de scellement dans une direction principalement transversale à la direction de ladite force de fixation, **caractérisée en ce que** la section conique du segment femelle (AF) a un angle d'inclinaison prédéterminé et **en ce que** la section conique du segment mâle (AM) a un angle d'inclinaison plus petit que ledit segment femelle prédéterminé (AF).

2. Structure de joint selon la revendication 1, **caractérisée en ce que** ledit angle d'inclinaison prédéterminé dudit segment femelle (AF) est compris entre 5 et 15 degrés sexagésimaux.

3. Structure de joint selon la revendication 1, **caractérisée en ce que** ledit au moins un joint d'étanchéité (42) a une section choisie parmi le groupe comprenant :
- une section pleine circulaire ;
- une section pleine quadrangulaire ;
- une section creuse en forme de S ;
- une section creuse en forme de double S à symétrie spéculaire ;
- une section qui est une combinaison desdites sections.

4. Structure de joint selon l'une quelconque des revendications 1 à 3, **caractérisée en ce que** ladite première extrémité (12) et ladite deuxième extrémité (14) sont configurées de manière à obtenir un joint en coupelle (10).

5. Structure de joint selon la revendication 4, **caractérisée en ce que**
- ladite première extrémité et ladite deuxième extrémité comprennent, en amont dudit segment femelle respectif (AF) et dudit segment mâle respectif (AM), au moins une zone d'insertion (BF, BM) ayant un espacement prédéterminé entre la section interne dudit premier conduit (20) et la section externe dudit deuxième conduit (40) ; et où
- ladite première extrémité et ladite deuxième extrémité comprennent, en amont de ladite zone d'insertion, au moins une zone de centrage (CF), la distance entre la section interne dudit premier conduit (20) et la section externe dudit deuxième conduit (40) étant plus petite que ladite distance prédéterminée dans la section de ladite zone d'insertion.

6. Structure de joint selon l'une quelconque des revendications 1 à 3, **caractérisée en ce que** ladite première extrémité (112) et ladite deuxième extrémité (114) sont configurées de manière à obtenir un joint bridé (100).

7. Structure de joint selon la revendication 6, **caractérisée en ce que** ledit joint bridé (100) comprend :
- au moins une paire de dispositifs de fixation (125a, 125b) associée à ladite première et à ladite deuxième extrémité (112, 114) et configurée pour assurer la fixation de ladite première extrémité (112) à ladite deuxième extrémité (114) .

8. Structure de joint selon l'une quelconque des revendications 1 à 7, **caractérisée en ce que**
ledit joint d'étanchéité est prévu pour être ajusté sur ledit segment (AM) au moyen d'une contrainte d'ajustement déterminée,
- ledit joint d'étanchéité ayant une section comprenant une pluralité de bords ; et **en ce**
- **qu'**au moins l'un desdits bords est capable d'effectuer sur ledit segment mâle (AM), sur la base de ladite contrainte d'ajustement, une pression spécifique ayant une composante radiale principale sur ledit conduit.

9. Procédé pour obtenir une structure de joint pour pipelines traversés par des fluides selon la revendication 1, dans lequel un premier conduit (20) a une première extrémité (12, 112) ayant au moins un segment femelle (AF), dans lequel un deuxième conduit (40) a une deuxième extrémité (14, 114) ayant au moins un segment mâle (AM) et dans lequel ledit deuxième conduit (40) est capable d'être fixé dans l'axe dudit premier conduit (20), **caractérisé par** les étapes consistant à :
- appliquer audit au moins un segment femelle (AF) une section substantiellement conique avec un angle d'inclinaison prédéterminé ;
- appliquer audit au moins un segment mâle une section substantiellement conique avec un angle d'inclinaison plus petit que ledit angle d'inclinaison prédéterminé dudit segment femelle (AF) ;
- fixer sur ledit au moins un segment mâle (AM) au moins un joint d'étanchéité pour produire, au moyen dudit joint d'étanchéité, au cours de la fixation, une force de scellement ayant une direction qui est principalement transversale à la direction de fixation.

10. Moteur à combustion interne comprenant au moins une structure de joint selon l'une quelconque des revendications 1 à 7.
